# EUROPÄISCHE PATENTSCHRIFT

(11) **EP 1 456 493 B1**
(45) Veröffentlichungstag und Bekanntmachung des Hinweises auf die Patenterteilung: **09.11.2005**
(21) Anmeldenummer: 02759866.3
(22) Anmeldetag: 16.08.2002
(51) Int. Cl.: E05F 15/00, E05F 15/20, B66B 13/26

(54) **TÜRÜBERWACHUNGSEINRICHTUNG**
DOOR MONITORING DEVICE
SYSTEME DE SURVEILLANCE DE PORTE

(30) Priorität: 12.10.2001 AT 16112001
(43) Veröffentlichungstag der Anmeldung: 15.09.2004
(73) Patentinhaber: Kasper, Ferdinand Dr., 1230 Wien (AT)
(72) Erfinder:
(74) Vertreter: Margotti, Herwig Franz
(86) Internationale Anmeldenummer: PCT/AT2002/000245
(87) Internationale Veröffentlichungsnummer: WO 2003/031757

(56) Entgegenhaltungen:
- EP-A- 0 699 619
- US-A- 5 142 152
- US-A- 5 410 149
- US-B1- 6 279 687

## Beschreibung

Die Erfindung betrifft eine Einrichtung zur Überwachung eines Durchgangs- und eines Zugangsbereichs einer automatisch bewegbaren Tür, wobei die Überwachungseinrichtung voneinander beabstandete, zusammenwirkende, strahlungsemittierende und strahlungsdetektierende Elemente umfasst und Ausgangssignale aus dem/den strahlungsdetektierenden Element(en) einer Türsicherungseinrichtung, wie z.B. einer Türblockierung, zugeführt werden.

Automatische Schiebetüren werden vielfach bei Aufzügen eingesetzt. Dabei besteht die Anforderung, eine Überwachungseinrichtung vorzusehen, die zumindest die Gegenwart von Personen und Gegenständen in der Türebene erkennt und in diesem Fall das Schließen der Tür verhindert oder das Abbrechen bzw. Umkehren von bereits begonnenen Schüeßvorgängen veranlasst. Es sind auch Systeme bekannt, die den Türzugangsbereich auf einer oder beiden Seiten der Tür überwachen und bei Erkennen von Personen oder Gegenständen in diesen Zugangsbereichen eine automatische Türe öffnen.

Zur Erhöhung der Sicherheit beim Betrieb automatischer Türen wäre es allerdings wünschenswert, sowohl die Türebene als auch den Türzugangsbereich gleichzeitig zu überwachen und bei Eintritt von Personen in den Türzugangsbereich auf einer oder beiden Seiten der Tür (bei Aufzügen: Gangseite) das Schließen der Tür zu verhindern oder das Abbrechen bzw. Umkehren von bereits begonnenen Schließvorgängen zu veranlassen.

Aus der EP 0 699 619 A2 ist eine Vorrichtung zur Überwachung von automatischen Türen bekannt, bei der zwei voneinander unabhängige Überwachungsschaltungen vorgesehen sind, die jeweils getrennte Paare an strahlungsemittierenden und gegenüberliegenden strahlungsdetektierenden Elementen umfassen. Eine Überwachungsschaltung überwacht dabei die Türebene und die andere Schaltung den Türzugangsbereich. Dieses System besteht somit aus zwei im Wesentlichen voneinander unabhängigen Teilsystemen, wobei in der Beschreibung auch erwähnt ist, dass gegebenenfalls bei bestehenden Türen eines dieser Teilsysteme nachrüstbar ist.

Der Nachteil der bekannten Vorrichtung liegt in dem hohen Bauteilaufwand für zwei unabhängige Schaltungen, komplizierter - Herstellung durch die erforderliche exakte Ausrichtung aller Sender und Empfänger, schlechter Justierbarkeit und Gefahr des Funktionsverlusts durch Verstellung im Betrieb.

Die vorliegende Erfindung bietet eine Lösung für die mit den bekannten Vorrichtungen verbundenen Probleme, gemäß den kennzeichnenden Merkmalen des Anspruchs 1. Die strahlungsemittierenden oder strahlungsdetektierenden Elemente mit breitem Wirkungsbereich weisen einen Wirkungsbereich von zumindest 45°, bevorzugt zumindest 90°, auf. Die strahlungsemittierenden oder strahlungsdetektierenden Elemente mit schmalem Wirkungsbereich weisen einen Wirkungsbereich von weniger als 45° auf, und verfügen bevorzugt über eine keulenförmige Richtcharakteristik, deren Breite maximal ± 15°, bezogen auf die Keulea-Hauptachse, beträgt, wodurch ein absolut zuverlässiges Betriebsverhalten erzielt wird. Vorteilhafte Ausgestaltungen der Erfindung sind in den Unteransprüchen dargelegt.

Mit der erfindungsgemäßen Überwachungseinrichtung wird ein integriertes System bereitgestellt, bei dem einem Element (entweder strahlungsemittierend oder -detektierend) mit breitem Wirkungsbereich zwei Elemente vom anderen Typ gegenüberstehen, die jeweils einen schmalen Wirkungsbereich aufweisen. Diese Lösung bietet wesentliche Vorteile gegenüber dem Stand der Technik in Bezug auf Bauteilaufwand, Zusammenbau, Justierung und Betriebsverlässlichkeit.

Die Erfindung ist bevorzugt für automatische Schiebetüren einsetzbar, kann bei entsprechender Anordnung der strahlungsemittierenden und strahlungsdetektierenden Elemente aber auch für Schwingtüren verwendet werden. Die Überwachungseinrichtung ist sowohl für einseitig (asymmetrisch) als auch für zweiseitig (symmetrisch) öffnende automatische Schiebetüren geeignet.

Zur Verringerung des Stromverbrauchs und der Leitungsanzahl kann vorgesehen werden, dass die zumindest zwei Elemente desselben Typs aus strahlungsdetektierenden oder strahlungsemittierenden Elementen abwechselnd oder gruppenweise aktivierbar sind, insbesondere mittels einer Multiplexerschaltung gesteuert werden.

Ein leichter Einbau der erfindungsgemäßen Einrichtung in eine automatische Türe wird ermöglicht, wenn jeweils eine Vielzahl strahlungsdetektierender und/oder strahlungsemittierender Elemente in Leisten gehalten werden, die an oder nahe der zu überwachenden Tür angeordnet werden. Dabei ist es auch möglich, die einzelnen Elemente beim Zusammenbau der Leisten vorzujustieren, was den Einbau an der Baustelle wesentlich vereinfacht.

Gute Verlässlichkeit wird erzielt, wenn die strahlungsemittierenden und sirahlungsdetektierenden Elemente optoelektronische Bauelemente sind, deren Frequenzspektrum vorzugsweise im Infrarot-Bereich liegt.

Ein besonders vorteilhaftes Merkmal der vorliegenden Erfindung ist die Integrierbarkeit von mehreren strahlungsemittierenden oder -detektierenden Elementen zu einem Bauteil, wodurch eine platzsparende und leicht fertigbare Anordnung erreicht werden kann. Dazu werden zwei strahlungsemittierende oder strahlungsdetektierende Elemente mit schmalem Wirkungsbereich so auf einem gemeinsamen Substrat angeordnet sind, dass ihre Hauptwirkrichtungen einen Winkel miteinander bilden. Bevorzugt werden zur Strahlenlenkung die beiden strahlungsemittierenden oder strahlungsdetektierenden Elemente von einem lichtdurchlässigen Gehäuse abgedeckt, das als optische Doppel-Linse ausgebildet ist. In einer bevorzugten Ausgestaltung der Erfindung ist eines der beiden strahlungsemittierenden oder strahlungsdetektierenden Elemente so auf dem Substrat angeordnet, dass seine Hauptwirkrichtung mit der optischen Achse seiner zugeordneten Linse zusammenfällt und das andere Element mit seiner Hauptwirkrichtung versetzt zur optischen Achse der zugeordneten Linse angeordnet ist.

Für verschiedene Betriebsbedingungen, aber auch zu Prüf- und Justierzwecken etc., ist es vorteilhaft, wenn mehrere strahlungsemittierende Elemente zeitgleich aktivierbar sind.

Eine Erhöhung der Betriebsverlässlichkeit der erfindungsgemäßen Überwachungseinrichtung kann durch verschiedene elektrische oder mathematische Maßnahmen erreicht werden. Diese Maßnahmen umfassen die Summierung mehrerer strahlungsdetektierender Elemente, oder die Auswahl jenes mit dem höchsten Pegel. Weiters können die Ausgangssignale von strahlungsdetektierenden Elementen in einer Kompensationsschaltung fehlerkompensiert werden. Eine andere vorteilhafte Fortbildung einer Fehlerkompensation umfasst die Auslöschung von Signalanteilen, die aus Strahlung von Fremdstrahlungsquellen oder Reflexion an statischen Objekten herrühren. Schließlich kann auch der Dynamikumfang der Signale aus den strahlungsdetektierenden Elementen anpassbar ausgeführt sein.

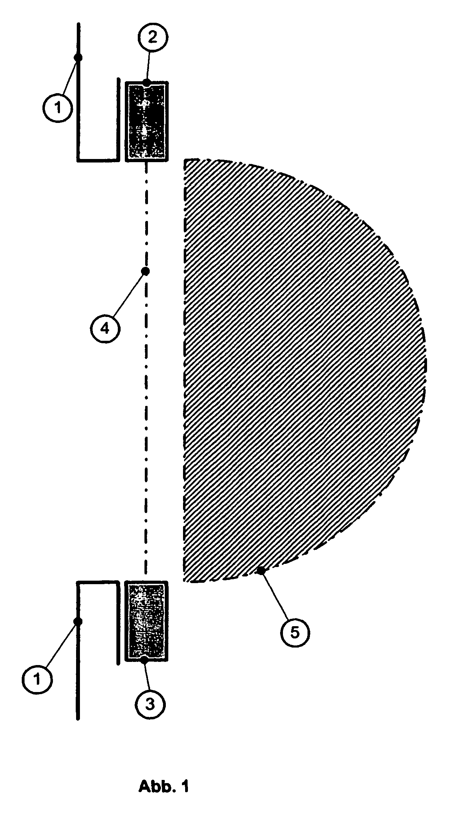

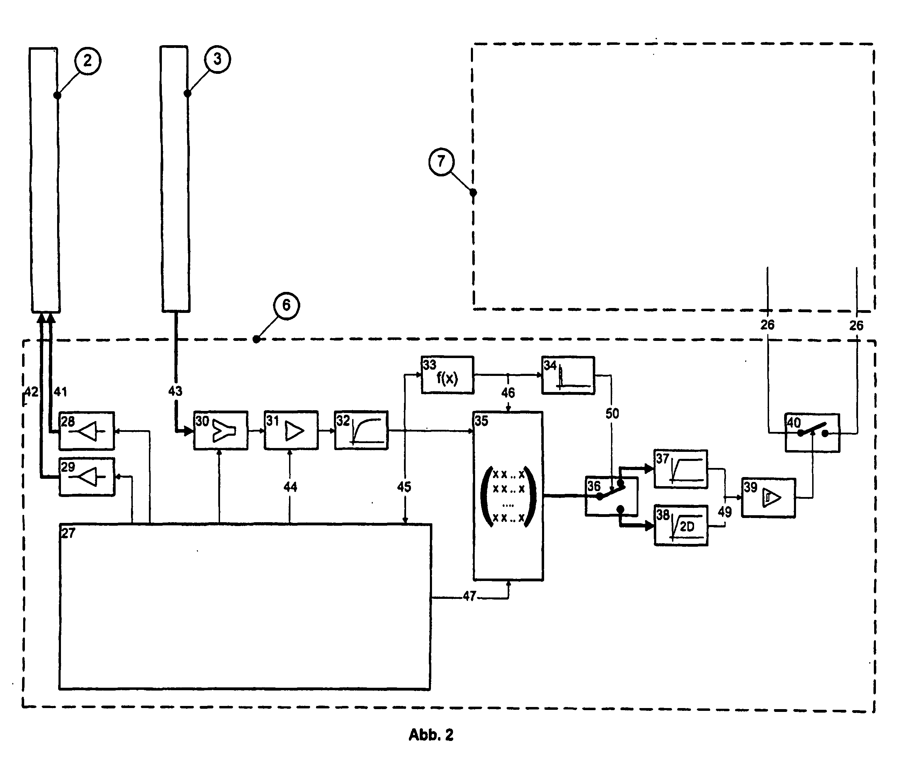

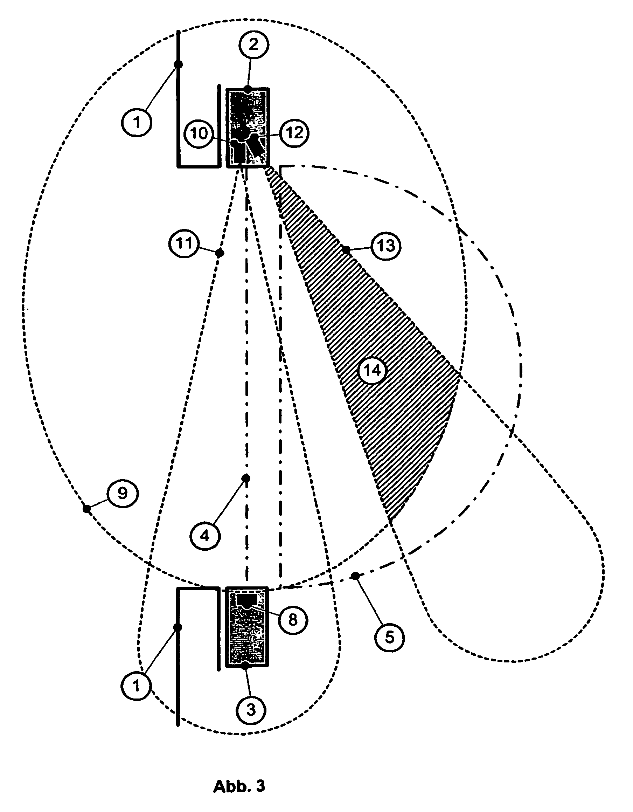

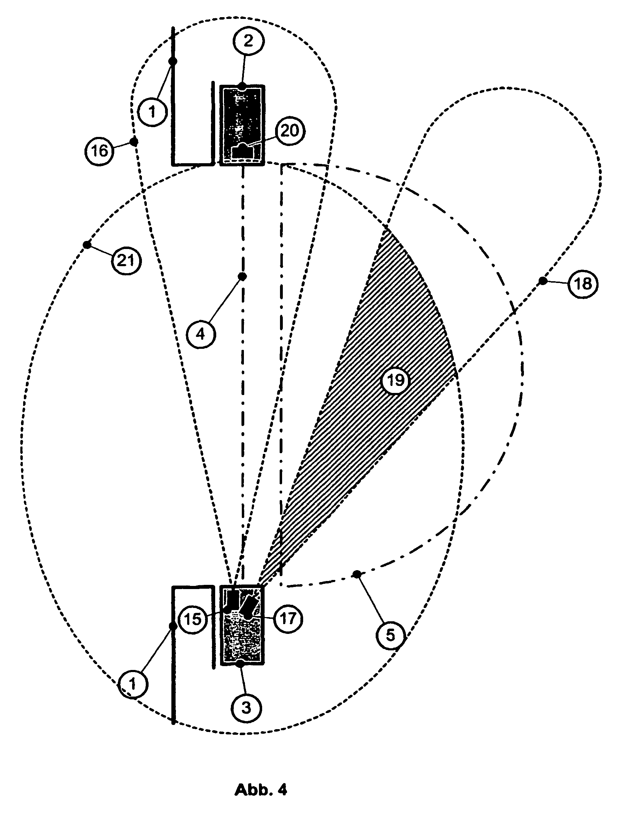

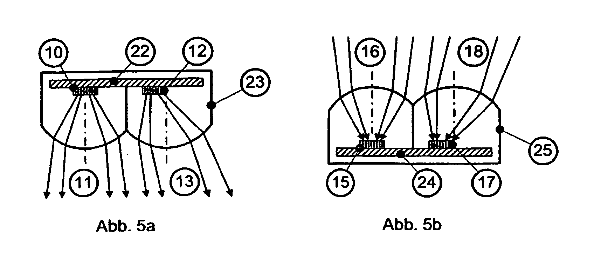

Im folgenden werden beispielhafte Ausführungen der Erfindung im Detail unter Verweis auf die Zeichnungen beschrieben. Dabei zeigt Fig. 1 in Draufsicht schematisch eine bevorzugte Ausführungsform der Erfindung mit einander gegenüberliegender Senderleiste und Empfängerleiste, Fig. 2 stellt ein Blockschaltbild einer Ausführungsform der Erfindung dar, Fig. 3 zeigt eine Bestückung der Ausführungsform von Fig. 1 mit ungerichtet wirkenden Infrarot-Detektoren und zwei Arten von fokussierten Infrarot-Sendern, Fig. 4 zeigt eine Bestückungsvariante der erfindungsgemäßen Überwachungseinrichtung von Fig. 1 mit einer Anzahl von fokussiert wirkenden Infrarot-Detektoren und ungerichtet wirkenden Infrarot-Sendern, Fig. 5a zeigt ein erfindungsgemäßes Bauelement, bei dem direkt und indirekt wirkende Infrarot-Quellen jeweils paarweise auf einem Chip angeordnet sind; und Fig. 5b zeigt ein erfindungsgemäßes Bauelement, bei dem direkt und indirekt wirkende Infrarot-Detektoren jeweils paarweise auf einem Chip angeordnet sind.

Zunächst Bezug nehmend auf Fig. 1 besteht eine bevorzugte Ausführungsform der Erfindung aus je einer Senderleiste 2 und einer Empfängerleiste 3. Eine in Fig. 2 dargestellte Steuerelektronik 6 kann entweder in die Sender- und Empfängerleiste integriert oder als eigenständiges Steuergerät ausgeführt sein. In jedem Fall liefert die Steuerelektronik 6 ein Signal 26 an eine automatische Schiebetür 7, durch welches der Schließvorgang unterbunden, abgebrochen oder umgekehrt wird. Senderleiste 2 und Empfängerleiste 3 sind, wie in Fig. 1 gezeigt, an einander gegenüberliegenden Kanten der Schiebetürblätter 1 so angebracht, daß dazwischen eine Ebene 4 aufgespannt wird, die bei Durchtritt durch die Tür durchschritten wird, und das Sichtfeld sowohl von Sender- als auch von Empfängerleiste den Türzugangsbereich 5 auf einer Seite der Türen umfaßt.

Der Aufbau von Sender- und Empfängerleiste entspricht einer der beiden folgenden Varianten:

### Variante a)

Die Empfängerleiste 3 ist, wie in Fig. 3 dargestellt, mit einer Anzahl von ungerichtet wirkenden Infrarot-Detektoren (IR-Detektoren) 8 bestückt, die einen unfokussierten Empfangsbereich 9 aufweisen und von denen jeder die IR-Strahlung sowohl in der Türebene 4 als auch aus dem Türzugangsbereich 5 detektieren kann. Die Senderleiste 2 ist mit einer Anzahl von Infrarot-Quellen (IR-Quellen) ausgestattet, die jeweils einen fokussierten Sendebereich besitzen. Die Senderleiste 2 enthält zwei Arten dieser IR-Quellen:
i) Direkt wirkende IR-Quellen 10, die in Richtung der Türebene 4 direkt auf die gegenüberliegenden IR-Detektoren 8 gerichtet sind (bei 11), wobei es unerheblich ist, wenn diese IR-Quellen auch in den Türzugangsbereich 5 einstrahlen.
ii) Indirekt wirkende IR-Quellen 12, die in Richtung des Türzugangsbereichs 5 gerichtet sind und deren Strahlung die gegenüberliegenden IR-Detektoren 8 nicht direkt, sondern nur durch Reflexion an einem Objekt innerhalb der Überlappung 14 von unfokussiertem Empfangsbereich 9 und fokussiertem Sendebereich 13 (welche sich innerhalb des Türzugangsbereichs 5 befindet) erreichen kann.

### Variante b)

Die Empfängerleiste 3 ist, wie in Fig. 4 dargestellt, mit einer Anzahl von Infrarot-Detektoren (IR-Detektoren) bestückt, die jeweils einen fokussierten Empfangsbereich besitzen. Die Empfängerleiste enthält zwei Arten dieser IR-Detektoren:
i) Direkt wirkende IR-Detektoren 15, die in Richtung der Türebene 4 direkt auf die gegenüberliegenden IR-Quellen 20 gerichtet sind (bei 16), wobei es unerheblich ist, wenn diese IR-Detektoren auch Strahlung aus dem Türzugangsbereich 5 empfangen können.
ii) Indirekt wirkende IR-Detektoren 17, die in Richtung des Türzugangsbereichs 5 gerichtet sind und die Strahlung der gegenüberliegenden IR-Quellen 20 nicht direkt, sondern nur durch Reflexion an einem Objekt innerhalb der Überlappung 19 von fokussiertem Empfangsbereich 18 und unfokussiertem Sendebereich 21 (welche sich innerhalb des Türzugangsbereichs 5 befindet) empfangen können.

Die Senderleiste 2 ist bei der Variante b) mit einer Anzahl von ungerichtet wirkenden Infrarot-Quellen 20 (IR-Quellen) ausgestattet, die einen unfokussierten Sendebereich 21 aufweisen und deren IR-Strahlung sowohl in die Türebene 4 als auch in den Türzugangsbereich 5 gesendet wird.

Folgende Ausführungsformen von direkt und indirekt wirkenden IR-Detektoren und IR-Quellen sind möglich:
i) Jede(r) direkt, indirekt und ungerichtet wirkende IR-Quelle und IR-Detektor ist jeweils als einzelnes elektronisches Bauelement aufgebaut.
ii) Ungerichtet wirkende IR-Detektoren 8 sind einzelne elektronische Bauelemente; direkt 10 und indirekt 12 wirkende IR-Quellen sind jeweils paarweise in Chipform auf einem gemeinsamen Substrat 22 in einem einzigen IR-strahlungs- bzw. lichtdurchlässigen Gehäuse 23 zusammengefaßt, wie in Fig. 5a gezeigt. Das Gehäuse 23 ist auf der Lichtaustrittsseite doppelt linsenförmig ausgebildet. Die direkt wirkende IR-Quelle 10 ist symmetrisch zur optischen Achse ihrer Linse angebracht, wodurch ihre Strahlung 11 achsensymmetrisch austritt. Die indirekt wirkende IR-Quelle 12 ist gegenüber der optischen Achse ihrer Linse versetzt, wodurch ihre Strahlung 13 gegenüber der optischen Achse geneigt austritt.
iii) Ungerichtet wirkende IR-Quellen 20 sind einzelne elektronische Bauelemente; direkt 15 und indirekt 17 wirkende IR-Detektoren sind jeweils paarweise in Chipform auf einem gemeinsamen Substrat 24 in einem einzigen IR-strahlungs- bzw. lichtdurchlässigen Gehäuse 25 zusammengefaßt, wie in Fig. 5b gezeigt. Das Gehäuse 25 ist auf der Lichtaustrittsseite doppelt linsenförmig ausgebildet. Der direkt wirkende IR-Detektor 15 ist symmetrisch zur optischen Achse seiner Linse angebracht, wodurch er nur achsensymmetrisch einfallende Strahlung 16 aufnimmt. Der indirekt wirkende IR-Detektor 17 ist gegenüber der optischen Achse seiner Linse versetzt, wodurch er nur Strahlung aufnimmt, die gegenüber der optischen Achse geneigt einfällt (bei 18).

Anhand von Fig. 2 wird nun eine elektronische Schaltung der erfindungsgemäßen Überwachungseinrichtung erläutert. Die Messung von direkter und indirekter Strahlintensität an der Empfängerleiste erfolgt dabei im Zeitmultiplexverfahren unter Kontrolle der Ablaufsteuerung 27 der Steuerelektronik 6. Die IR-Quellen in der Senderleiste 2 sind elektrisch an den Kreuzungspunkten von Zeilenleitungen 41 und Spaltenleitungen 42 angeschlossen, welche von der Ablaufsteuerung 27 über die Zeilentreiber 28 und Spaltentreiber 29 so bedient werden, daß jeweils an einem einzigen Kreuzungspunkt Strom durch den/die dort angeschlossene(n) IR-Quellen fließt. Aus allen Signalen 43 der IR-Detektoren der Empfängerleiste 3 wählt die Ablaufsteuerung 27 über einen Multiplexer 30 ein bestimmtes Signal zur weiteren Verarbeitung aus, und zwar,
wenn die Variante a) gemäß Fig. 3 ausgeführt ist:
direkte Strahlintensität: während des Sendens einer direkt wirkenden IR-Quelle 10 wird das auf dem gegenüberliegenden, ungerichtet wirkenden IR-Detektor 8 empfangene Signal gemessen;
indirekte Strahlintensität: während des Sendens einer indirekt wirkenden IR-Quelle 12 wird das auf dem (selben) gegenüberliegenden, ungerichtet wirkenden IR-Detektor 8 empfangene Signal gemessen;
wenn die Variante b) gemäß Fig. 4 ausgeführt ist:
direkte Strahlintensität: während des Sendens einer ungerichtet wirkenden IR-Quelle 20 wird das auf dem gegenüberliegenden, direkt wirkenden IR-Detektor 15 empfangene Signal gemessen;
indirekte Strahlintensität: während des Sendens einer (derselben) ungerichtet wirkenden IR-Quelle 20 wird das auf dem gegenüberliegenden, indirekt wirkenden IR-Detektor 17 empfangene Signal gemessen.

Eine Erhöhung der Empfindlichkeit für indirekte Strahlen und Verbesserung des Signal/Rausch-Verhaltens für indirekte Strahlen an den IR-Detektoren wird durch folgende Maßnahmen erzielt:

An bestimmten Kreuzungspunkten der Zeilenleitungen 41 und der Spaltenleitungen 42 der Senderleiste 2 sind jeweils mehrere IR-Quellen 12 oder 20 angeschlossen, die somit gleichzeitig senden und die Strahlungsintensität im Türzugangsbereich 5 erhöhen.

Alternativ oder zusätzlich dazu wird durch entsprechende Ansteuerung und/oder Beschaltung des Multiplexers 30 bei der Messung der Strahlungsintensität aus dem Türzugangsbereich 5 die Summe der Signale mehrerer IR-Detektoren (8 oder 17) gemessen.

Ein hoher Dynamikbereich bei der Messung direkter und indirekter Strahlen wird durch folgende Maßnahmen erzielt, vgl. Fig. 2:

Der Offset der Verstärkungskette, bestehend aus Multiplexer 30, Verstärker 31 und Logarithmierer 32 wird automatisch kompensiert. Das während der Sendepausen der IR-Quellen anliegende Signal 45 wird von der Ablaufsteuerung 27 ausgewertet und durch Einspeisung einer geeigneten Kompensationsgröße 44 in den Verstärker 31 auf Null gebracht.

Alternativ dazu wird die Dynamik der Signale 43 der IR-Detektoren nach Durchgang durch den Verstärker 31 vor der Weiterverarbeitung im Funktionsblock 32 komprimiert. Dies geschieht durch Logarithmieren oder durch Anwendung einer anderen monotonen, mit steigender Signalamplitude flacher werdenden Funktion.

Die Leistung der von den IR-Quellen ausgesendeten Strahlung kann für jede IR-Quelle einzeln je nach Erfordernis über die Höhe des Spaltenstroms 42 individuell verändert werden (z.B. höhere Leistung für indirekt wirkende IR-Quellen bzw. für ungerichtet wirkende IR-Quellen, die zu indirekt wirkenden IR-Detektoren senden).

Weiters ist die Unterdrückung von zeit- und ortsunveränderlichen Hintergrundreflexionen, Kompensation ungleichmäßiger Lichtausbeute der IR-Quellen bzw. ungleichmäßiger Empfindlichkeit der IR-Detektoren durch die folgenden Maßnahmen möglich, wie in Fig. 2 dargestellt:

Der momentane Abstand 46 zwischen Sender- und Empfängerleiste wird im Funktionsblock 33 aus der Größe der Empfangssignale aller nicht unterbrochenen, direkten (in der Türebene befindlichen) Strahlen abgeschätzt. Grundlage dieser Abschätzung ist der umgekehrt quadratische Zusammenhang zwischen Entfernung und Strahlungs-Energiedichte.

Die Auswerteelektronik 27 aktualisiert laufend eine zweidimensionale Speichermatrix 35 der indirekten Empfangssignale 45 (d.h. der Empfangssignale aus Reflexionen im Türzugangsbereich). Die eine Dimension bilden die Abstände 46 zwischen Sender- und Empfängerleiste. Die andere Dimension bilden die vertikalen Positionen 47 der an den Empfangssignalen 45 beteiligten IR-Quellen und IR-Detektoren. Jede Spalte entspricht somit den Empfangssignalen 45 aller indirekt wirkenden IR-Detektoren (bzw. aller ungerichtet wirkenden IR-Detektoren, die von indirekt wirkenden IR-Quellen bestrahlt werden), bei einem bestimmten, konstanten Abstand 46 zwischen Sender- und Empfängerleiste. Jede Zeile entspricht den Empfangssignalen 45 eines einzigen indirekt wirkenden IR-Detektors (bzw. eines einzigen ungerichtet wirkenden IR-Detektors, der von einer indirekt wirkenden IR-Quelle bestrahlt wird), für unterschiedliche Abstände 46 zwischen Sender- und Empfängerleiste.

Bei Türbewegung, d.h. solange sich die Abstandsinformation 46 verändert und der Differentiator 34 ein Signal 50 liefert, wird der zeitliche Verlauf 48 des Zustands dieser Matrix einer zweidimensionalen Hochpaßfilterung 38 unterzogen. Das Ergebnis 49 entspricht der Änderung der aus dem Türzugangsbereich reflektierten IR-Strahlung sowohl in Richtung der Türbewegung, als auch in vertikaler Richtung, als auch im zeitlichen Verlauf.

Bei Türstillstand, d.h. solange sich die Abstandsinformation 46 nicht verändert und der Differentiator 34 kein Signal 50 liefert, wird der zeitliche Verlauf 48 derjenigen Spalte der Matrix, die dem gegenwärtigen Abstand 46 entspricht, einer Hochpaßfilterung 37 unterzogen. Das Ergebnis 49 entspricht der Änderung der aus dem Türzugangsbereich reflektierten IR-Strahlung sowohl in vertikaler Richtung als auch im zeitlichen Verlauf.

Eine Änderung 49, die einen Schwellwert in positiver Richtung überschreitet, wird in beiden vorher genannten Fällen im Diskriminator 39 erkannt und führt zur Signalisierung 26 eines Hindernisses im Türzugangsbereich über den Kontakt 40.

## Patentansprüche

1. Einrichtung zur Überwachung eines Durchgangs- (4) und eines Zugangsbereichs (5) einer automatisch bewegbaren Tür (1), wobei die Überwachungseinrichtung voneinander beabstandete, zusammenwirkende, strahlungsemittierende und strahlungsdetektierende Elemente umfasst und Ausgangssignale aus dem/den strahlungsdetektierenden Element(en) einer Türsicherungseinrichtung, wie z.B. einer Türblockierung, zugeführt werden, **dadurch gekennzeichnet, dass** zumindest eines aus den strahlungsemittierenden oder strahlungsdetektierenden Elementen (8; 20) einen breiten Wirkungsbereich (9; 21) von zumindest 45°, bevorzugt zumindest 90°, aufweist und diesem Element (8; 20) zumindest zwei des anderen Typs aus strahlungsdetektierenden oder strahlungsemittierenden Elementen (10, 12; 15, 17) gegenüberliegend angeordnet sind, die über einen schmalen Wirkungsbereich (11, 13; 16, 18) von weniger als 45°, und bevorzugt über eine keulenförmige Richtcharakteristik verfügen, deren Breite maximal ± 15°, bezogen auf die Keulen-Hauptachse, beträgt, wobei die Hauptwirkrichtung zumindest eines der Elemente (10; 15) mit schmalem Wirkungsbereich (11; 16) in den Durchgangsbereich (4) und direkt auf das gegenüberliegende Element (8; 20) mit breitem Wirkungsbereich (9; 21) gerichtet ist und das strahlungsdetektierende Element (8; 15) davon bei einer Unterbrechung der Strahlung des strahlungsemittierenden Elements (10; 20) ein Ausgangssignal abgibt, und wobei die Hauptwirkrichtung zumindest eines weiteren der Elemente (12; 17) mit schmalem Wirkungsbereich (13; 18) in den Zugangsbereich (5) gerichtet ist und das den Zugangsbereich (5) abfühlende strahlungsdetektierende Element (8; 17) auf Reflexion der in den Zugangsbereich gesandten Strahlung des Strahlungsemittierenden Elements (12; 20) anspricht und ein Ausgangssignal abgibt.

2. Überwachungseinrichtung nach Anspruch 1, **dadurch gekennzeichnet, dass** die zumindest zwei Elemente desselben Typs aus strahlungsdetektierenden oder strahlungsemittierenden Elementen abwechselnd oder gruppenweise aktivierbar sind, insbesondere mittels einer Multiplexerschaltung gesteuert werden.

3. Überwachungseinrichtung nach einem der vorhergehenden Ansprüche, **dadurch gekennzeichnet, dass** jeweils eine Vielzahl strahlungsdetektierender und/oder strahlungsemittierender Elemente in Leisten gehalten werden, die an oder nahe der zu überwachenden Tür angeordnet sind.

4. Überwachungseinrichtung nach einem der vorhergehenden Ansprüche, **dadurch gekennzeichnet, dass** die strahlungsemittierenden und strahlungsdetektierenden Elemente optoelektronische Bauelemente sind, deren Frequenzspektrurn vorzugsweise im Infrarot-Bereich liegt.

5. Überwachungseinrichtung nach Anspruch 4, **dadurch gekennzeichnet, dass** zwei strahlungsemittierende oder - strahlungsdetektierende Elemente mit schmalem Wirkungsbereich so auf einem gemeinsamen Substrat angeordnet sind, dass ihre Hauprwirkrichtungen einen Winkel miteinander bilden.

6. Überwachungseinrichtung nach Anspruch 5, **dadurch gekennzeichnet, dass** die beiden strahlungsemittierenden oder strahlungsdetektierenden Elemente von einem lichtdurchlässigen Gehäuse abgedeckt werden, das als optische Doppel-Linse ausgebildet ist.

7. Überwachungseinrichtung nach Anspruch 6, **dadurch gekennzeichnet, dass** eines der beiden strahlungsemittierenden oder strahlungsdetektierenden Elemente so auf dem Substrat angeordnet ist, dass seine Hauptwirkrichtung mit der optischen Achse seiner zugeordneten Linse zusammenfällt und das andere Element mit seiner Hauptwirkrichtung versetzt zur optischen Achse der zugeordneten Linse angeordnet ist.

8. Überwachungseinrichtung nach einem der vorhergehenden Ansprüche, **dadurch gekennzeichnet, dass** mehrere strahlungsemittierende Elemente zeitgleich aktivierbar sind.

9. Überwachungseinrichtung nach einem der vorhergehenden Ansprüche, **dadurch gekennzeichnet, dass** die Ausgangssignale mehrerer strahlungsdetektierender Elemente summiert werden oder jenes mit dem höchsten Pegel ausgewählt wird.

10. Überwachungseinrichtung nach einem der vorhergehenden Ansprüche, **dadurch gekennzeichnet, dass** die Ausgangssignale von strahlungsdetektierenden Elementen in einer Kompensationsschaltung fehlerkompensiert werden.

11. Überwachungseinrichtung nach Anspruch 10, **dadurch gekennzeichnet, dass** die Fehlerkompensation die Auslöschung von Signalanteilen umfasst, die aus Strahlung von Fremdstrahlungsquellen oder Reflexion an statischen Objekten herrühren.

12. Überwachungseinrichtung nach einem der vorhergehenden Ansprüche, **dadurch gekennzeichnet, dass** der Dynamikumfang der Signale aus den strahlunssdeiektierenden Elementen anpassbar ist.

## Claims

1. A device for monitoring a passage area (4) and an access area (5) of an automatically movable door (1), whereby the monitoring device comprises distanced, cooperating, radiation-emitting and radiation-detecting elements and output signals are supplied from the radiation-detecting element(s) to a door locking device such as a door blocking device, **characterized in that** at least one of the radiation-emitting or radiation-detecting elements (8; 20) has a wide action range (9; 21) of at least 45°, preferably of at least 90°, and at least two radiation-detecting or radiation-emitting elements (10, 12; 15, 17) of the other type having a narrow action range (11, 13; 16, 18) of less than 45° and preferably lobar directional characteristics whose width amounts to a maximum of ± 15°, based on the principal beam axis, are arranged opposite said element (8; 20), whereby the main active direction of at least one of the elements (10; 15) with a narrow action range (11; 16) is oriented toward the passage area (4) and directly toward the opposite element (8; 20) with a wide action range (9; 21) and the radiation-detecting element (8; 15) thereof delivers an output signal if the radiation of the radiation-emitting element (10; 20) is interrupted, and whereby the main active direction of at least one further element (12; 17) with a narrow action range (13; 18) is directed toward the access area (5) and the radiation-detecting element (8; 17) sensing the access area (5) responds to a reflection of the radiation of the radiation-emitting element (12; 20), which radiation is sent into the access area, and delivers an output signal.

2. A monitoring device according to claim 1, **characterized in that** the at least two elements of the same type can be activated alternately or in groups from radiation-detecting or radiation-emitting elements and are controlled in particular by a multiplexer circuit.

3. A monitoring device according to any of the preceding claims, **characterized in that** in each case a plurality of radiation-detecting and/or radiation-emitting elements are kept in strips arranged on or close to the door to be monitored.

4. A monitoring device according to any of the preceding claims, **characterized in that** the radiation-emitting and radiation-detecting elements are optoelectronic components whose frequency spectrum preferably lies in the infrared range.

5. A monitoring device according to claim 4, **characterized in that** two radiation-emitting or radiation-detecting elements with a narrow action range are arranged on a common substrate in such a way that their main active directions will form an angle with each other.

6. A monitoring device according to claim 5, **characterized in that** the two radiation-emitting or radiation-detecting elements are covered by a transparent casing configured as an optical double lens.

7. A monitoring device according to claim 6, **characterized in that** one of the two radiation-emitting or radiation-detecting elements is arranged on the substrate in such a way that its main active direction coincides with the optical axis of the lens associated to it and the other element is arranged with its main active direction offset from the optical axis of the associated lens.

8. A monitoring device according to any of the preceding claims, **characterized in that** several radiation-emitting elements can be activated at the same time.

9. A monitoring device according to any of the preceding claims, **characterized in that** the output signals of several radiation-detecting elements are summed up and that with the highest level is selected.

10. A monitoring device according to any of the preceding claims, **characterized in that** the output signals of radiation-detecting elements are error-compensated in a compensation circuit.

11. A monitoring device according to claim 10, **characterized in that** the error compensation involves the deletion of signal portions stemming from a radiation from external radiation sources or a reflection on static objects.

12. A monitoring device according to any of the preceding claims, **characterized in that** the dynamic range of the signals from the radiation-detecting elements is adjustable.

## Revendications

1. Système de surveillance d'une zone de passage (4) ou d'une zone d'accès (5) d'une porte à mouvement automatique (1), le système de surveillance comprenant des éléments distancés et coopérant entre eux, émettant et détectant des faisceaux et des signaux de sortie émanant de l'élément/des éléments détectant des faisceaux étant amenés à un système de sécurisation de la porte, comme par exemple un blocage de porte, **caractérisé en ce qu'**au moins l'un des éléments émettant ou détectant des faisceaux (8 ; 20) présente un large champ d'action (9 ; 21) d'au moins 45°, de préférence d'au moins 90° et **en ce qu'**au moins deux éléments de l'autre type, soit détectant ou émettant des faisceaux (10, 12 ; 15, 17), disposant d'un champ d'action étroit (11, 13 ; 16, 18) inférieur à 45° et de préférence d'une directivité lobée, dont la largeur est au maximum de ± 15°, par rapport à l'axe principal du lobe de rayonnement sont disposés à l'opposée de cet élément (8 ; 20), la directivité principale d'au moins l'un des éléments (10 ; 15) à champ d'action étroit (11 ; 16) étant dirigée dans la zone de passage (4) et directement sur l'élément opposé (8 ; 20) à large champ d'action (9 ; 21) et l'élément d'entre eux détectant des faisceaux (8 ; 15) délivrant un signal de sortie, à l'interruption du faisceau de l'élément émettant des faisceaux (10 ; 20) et la directivité principale d'au moins l'un des éléments supplémentaires (12 ; 17) à champ d'action étroit (13 ; 18) étant dirigée dans la zone d'accès (5) et l'élément détectant des faisceaux (8 ; 17) qui balaye la zone d'accès (5) se déclenchant sous l'effet de la réflexion du faisceau émis dans la zone d'accès par l'élément émettant des faisceaux (12 ; 20) et délivrant un signal de sortie.

2. Système de surveillance selon la revendication 1, **caractérisé en ce qu'**au moins les deux éléments de même type parmi les éléments détectant et émettant des faisceaux sont activables en alternance ou par groupes, notamment à l'aide d'un circuit de multiplexage.

3. Système de surveillance selon l'une quelconque des revendications précédentes, **caractérisé en ce que** respectivement une pluralité d'éléments détectant/et ou émettant des faisceaux est maintenue dans des réglettes, qui sont disposées sur ou à proximité de la porte à surveiller.

4. Système de surveillance selon l'une quelconque des revendications précédentes, **caractérisé en ce que** les éléments émettant et détectant des faisceaux sont des composants optoélectroniques, dont le spectre de fréquence se situe de préférence dans la plage des infrarouges.

5. Système de surveillance selon la revendication 4, **caractérisé en ce que** deux éléments émettant ou détectant des faisceaux à champ d'action étroit sont disposés sur un substrat commun, de façon à ce que leurs directivités principales forment un angle entre elles.

6. Système de surveillance selon la revendication 5, **caractérisé en ce que** les deux éléments émettant ou détectant des faisceaux sont recouverts par un boîtier transparent, qui est conçu sous la forme d'une double lentille optique.

7. Système de surveillance selon la revendication 6, **caractérisé en ce que** l'un des deux éléments émettant ou détectant des faisceaux est disposé sur le substrat de façon à ce que sa directivité principale coïncide avec l'axe optique de la lentille qui lui est associée et **en ce que** l'autre élément est disposé avec sa directivité déportée par rapport à l'axe optique de la lentille associée.

8. Système de surveillance selon l'une quelconque des revendications précédentes, **caractérisé en ce que** plusieurs éléments émettant des faisceaux sont activables simultanément.

9. Système de surveillance selon l'une quelconque des revendications précédentes, **caractérisé en ce que** les signaux de sortie de plusieurs éléments détectant des faisceaux sont totalisés ou **en ce que** celui de plus haut niveau est sélectionné.

10. Système de surveillance selon l'une quelconque des revendications précédentes, **caractérisé en ce que** les erreurs de signaux de sortie d'éléments détectant des faisceaux sont compensées dans un circuit de compensation.

11. Système de surveillance selon la revendication 10, **caractérisé en ce que** la compensation d'erreurs comporte l'effacement de fractions de signaux, qui proviennent d'un faisceau de sources de rayonnement tierces ou d'une réflexion sur des objets statiques.

12. Système de surveillance selon l'une quelconque des revendications précédentes, **caractérisé en ce que** la configuration dynamique des signaux émanant des éléments détectant des faisceaux est adaptable.
